# FASCICULE DE BREVET EUROPEEN

(11) **EP 3 077 562 B1**
(45) Date de publication et mention de la délivrance du brevet: **06.03.2019**
(21) Numéro de dépôt: 14830606.1
(22) Date de dépôt: 08.12.2014
(51) Int. Cl.: C23C 2/28, C23C 2/00, C23C 2/40, C21D 9/60, C21D 1/42, F27D 11/06, H05B 6/10, H05B 6/44

(54) **LIGNE DE TRAITEMENT EN CONTINU D'UNE BANDE METALLIQUE AMAGNETIQUE COMPRENANT UNE SECTION DE GALVANNEALING ET PROCEDE DE CHAUFFAGE PAR INDUCTION DE LADITE BANDE DANS LADITE SECTION DE GALVANNEALING**
KONTINUIERLICHE VERARBEITUNGSLINIE ZUR BEARBEITUNG EINES NICHTMAGNETISCHEN METALLBANDES MIT EINEM GALVANISIERUNGSABSCHNITT SOWIE VERFAHREN ZUR INDUKTIONSERWÄRMUNG DIESES BANDES IN DIESEM GALVANISIERUNGSABSCHNITT
CONTINUOUS PROCESSING LINE FOR PROCESSING A NON-MAGNETIC METAL STRIP INCLUDING A GALVANNEALING SECTION AND METHOD FOR INDUCTION HEATING OF SAID STRIP IN SAID GALVANNEALING SECTION

(30) Priorité: 06.12.2013 FR 1362272
(43) Date de publication de la demande: 12.10.2016
(73) Titulaire: Fives Celes, 68610 Lautenbach (FR)
(72) Inventeur: PATARD, Emmanuel, F-68610 Lautenbach (FR)
(74) Mandataire: IP Trust
(86) Numéro de dépôt international: PCT/IB2014/066694
(87) Numéro de publication internationale: WO 2015/083141

(56) Documents cités:
- EP-A1- 0 308 182
- EP-A1- 1 148 762
- EP-A1- 1 878 811
- WO-A2-2010/011987
- FR-A1- 2 661 423
- FR-A1- 2 887 737
- GB-A- 2 182 230

## Description

L'invention concerne les lignes de galvanisation en continue de bobines d'acier, et plus particulièrement la section de galvannealing. Elle porte notamment sur un appareil et un procédé de chauffage de la bande par induction à flux transverse en vue du chauffage de nuances d'aciers amagnétiques lors du procédé de galvannealing.

La demande d'acier galvanisé à hautes performances mécaniques est en forte croissance au niveau mondial. Cela est notamment vrai dans le secteur de l'automobile où l'usage de ces aciers permet de réduire l'épaisseur des tôles pour une même résistance mécanique. Le gain en poids qui résulte de la réduction des épaisseurs se traduit par une moindre consommation des véhicules et donc moins de rejets en CO2. Les aciers à haute teneur en manganèse sont particulièrement intéressants car ils concilient une grande résistance mécanique et une forte aptitude à la mise en forme par emboutissage.

La tôle utilisée pour la carrosserie des automobiles est souvent revêtue selon le procédé de galvannealing. Dans ce procédé, une étape est ajoutée après la galvanisation au trempé de la bande. Elle consiste en un réchauffage de la bande d'acier galvanisée en sortie du bain de zinc, suivi d'une phase de maintien. Dans cette étape la couche de zinc se voit modifiée par la diffusion du fer de la tôle et du zinc du revêtement qui conduit à la création d'un alliage entre le support métallique et la couche de zinc. Le galvannealing augmente la soudabilité de la tôle revêtue et améliore la qualité de surface de la tôle après peinture.

On notera ici que le terme galvannealing n'est pas assimilable à un recuit qui se fait à une température plus élevée, autour de 800°C alors que le galvannealing s'effectue lui a une température plus faible, inférieure à 650°C. Il s'agit d'un traitement de réchauffage et de maintien, qui pourrait être appelé « traitement d'alliation » (alliation comme création d'un alliage entre la couche de galvanisation et son support). On peut faire référence au paragraphe 2.3.7.2 du document m1531 des « Techniques de l'ingénieur » qui explique le procédé de galvannealing au travers d'un exemple. Il précise que lorsque la tôle sort de la cuve de galvanisation vers 450°C, en portant rapidement cette température vers 500°C puis en maintenant la bande à cette température pendant par exemple 10 secondes, le revêtement de zinc se transforme en alliage fer-zinc par diffusion du fer dans le zinc liquide et le revêtement obtenu présente alors une teinte gris mat et contient 8 à 12 % de fer. Ce traitement est réalisé dans un four vertical disposé aussitôt après la cuve sur la passe montante de la tour de refroidissement.

Le réchauffage de la bande dans une section de galvannealing est traditionnellement réalisé par un équipement de chauffage par induction à flux longitudinal. Il a l'avantage de transmettre une forte densité de puissance à la bande permettant ainsi de réduire la longueur de l'équipement. La compacité de l'équipement de chauffage est en effet cruciale dans la tour de galvanisation car l'ajout d'une étape de galvannealing entraine une forte augmentation de la hauteur de la tour en raison de la longueur des équipements à installer pour assurer le réchauffage et le maintien à la température de la bande ainsi que le refroidissement supplémentaire de celle-ci. En effet, le revêtement de la bande doit être solidifié avant d'atteindre le rouleau déflecteur placé au sommet de la tour pour ne pas marquer la surface de la bande. La longueur de l'équipement de maintien est définie par le temps nécessaire pour assurer la diffusion des métaux. L'apport calorifique nécessaire au maintien en température de la bande étant limité, le chauffage de la bande est généralement réalisé par des résistances électriques.

En entrée de la section de galvannealing, les rives de la bande sont plus froides. En effet, outre un refroidissement naturel plus important sur les bords, l'air soufflé par la machine d'essorage pour retirer le zinc en excès sur la bande entraine un refroidissement plus important des rives. Pendant le maintien à température de la bande qui suit son chauffage à la température requise pour le galvannealing, il est avantageux que la température de la bande soit homogène sur sa largeur de sorte que la diffusion du fer dans le zinc liquide soit la même sur toute la largeur de la bande, et notamment sur les rives. Pour compenser une température plus basse des rives en entrée de la section de galvannealing il est donc nécessaire de surchauffer celles-ci. Pour cela, FR2661423 décrit l'ajout de dispositifs de chauffage de rives. Cette solution n'est pas pleinement satisfaisante car elle nécessite la mise en place d'équipements supplémentaires pour palier à ce problème.

Le galvannealing n'est pas utilisé pour toutes les qualités de tôles galvanisées. Il est nécessaire de mettre hors ligne l'équipement de galvannealing lorsqu'il n'est pas utilisé pour le remplacer par des gaines de refroidissement permettant d'augmenter la capacité de refroidissement de la tour et ainsi la capacité de production de la ligne en acier galvanisé (GI). Par principe, un équipement de chauffage par induction à flux longitudinal comprend une bobine qui entoure la bande. Pour permettre la mise hors ligne de l'équipement de chauffage, il est nécessaire de prévoir un inducteur qui puisse s'ouvrir. La complexité d'un tel équipement, par exemple décrit par JP2903449, rend cette solution peut séduisante.

Les aciers à haute teneur en manganèse ont généralement une structure austénitique à température ambiante et sont amagnétiques. Le réchauffage par induction à flux longitudinal n'est plus possible pour ces aciers en raison du très faible rendement de chauffe. Ainsi, il n'existe pas à ce jour de dispositif de chauffage par induction dans les sections de galvannealing pour le revêtement d'aciers amagnétiques. La solution selon l'état de la technique consiste à installer des équipements équipés de brûleurs ou de résistances électriques mais conduit à une sur-longueur de l'équipement en raison de densités de puissance limitées.

L'invention apporte une solution aux problèmes énoncés précédemment particulièrement avantageuse pour le galvannealing des aciers amagnétiques, en permettant d'avoir une section de réchauffage très compacte, qui puisse facilement être mise hors ligne, et qui permette de surchauffer les rives.
L'invention a ainsi pour objet, selon un premier aspect, une ligne de traitement en continu d'une bande métallique amagnétique, la ligne de traitement comprenant une section de revêtement et une section de galvannealing placée en aval de la section de revêtement et comprenant un appareil de chauffage par induction destiné à chauffer ladite bande métallique amagnétique, l'appareil permettant de relever la température de la bande au niveau requis pour obtenir l'évolution souhaitée de son revêtement, caractérisé en ce que l'appareil de chauffage comprend au moins un inducteur à flux transverse.

Il s'agit d'une application nouvelle de l'induction à flux transverse dans une ligne continue, celle-ci n'ayant été envisagée par l'homme du métier que pour des sections de recuit à haute température, généralement au-delà de 800°C, lesdites sections de recuit permettant de modifier en profondeur la structure métallurgique de la bande. Avec un inducteur à flux transverse, le flux magnétique est dirigé perpendiculairement à la surface de la bande. Par opposition, le flux magnétique est tangent à la surface de bande lors d'un chauffage à flux longitudinal. L'induction à flux transverse permet, dans le cadre de l'invention, de chauffer des matériaux amagnétiques avec un très bon rendement énergétique et de fortes densités de puissance.

Dans la pratique, l'inducteur à flux transverse est composé de deux structures de pôles magnétiques situées de part et d'autre de la bande à chauffer, avec des bobines d'excitation. Le courant alternatif dans les bobines est polarisé de telle sorte que, à tout instant, les pôles magnétiques se faisant face sont de signes opposé, ce qui oblige le flux magnétique à traverser la bande.

La mise en oeuvre d'un inducteur à flux transverse pour le réchauffage de la bande dans une section de galvannealing est rendu complexe du fait de la nécessité d'obtenir une qualité de chauffage optimale pour les différentes largeurs de bande. Ainsi, l'appareil selon l'invention a des bobines dont les dimensions sont adaptées de sorte d'influer sur le profil transversal de température de la bande. Selon une variante de réalisation de l'invention, l'appareil comprend des écrans mobiles latéralement sur la largeur de bande, dans le but d'influer sur le profil transversal de température de la bande, de sorte qu'un ajustement de la position des écrans permet de régler une surchauffe des rives de la bande. Les écrans peuvent être également mobiles transversalement pour ajuster leur écartement par rapport à la bande. L'inducteur à flux transverse comprend généralement deux paires de bobines. Le choix du nombre de paires de bobines sera notamment fonction des caractéristiques de la bande à chauffer et de la capacité de production de la ligne.

L'inducteur à flux transverse selon l'invention présente une conception en deux plateaux situés de part et d'autre de la bande d'acier de manière indépendante, non reliés mécaniquement. Elle permet un escamotage ou retrait aisé de la section de galvannealing lorsque celle-ci n'est pas utilisée, libérant ainsi un espace pouvant être utilisé à d'autres fins lorsque la ligne de galvanisation ne produit pas de l'acier galvannealé (GA).

L'invention a également pour objet, selon un second aspect, un procédé de chauffage par induction destiné à chauffer une bande métallique amagnétique en circulation dans une section de galvannealing d'une ligne de traitement en continu de ladite bande métallique amagnétique, ladite ligne de traitement comprenant une section de revêtement, la section de galvannealing étant placée en aval de la section de revêtement, caractérisé en ce que le chauffage de la bande est réalisé au moyen d'un inducteur à flux transverse.

Ainsi, la section de revêtement de la ligne permet une galvanisation au trempé et le chauffage selon l'invention permet de réaliser un galvannealing.

Selon l'invention, pour anticiper le refroidissement supplémentaire des rives qui résulte de l'effet de bord dans la machine d'essorage, les rives de la bande sont directement surchauffées par l'inducteur à flux transverse afin d'obtenir une température de bande sensiblement homogène sur sa largeur lors de la phase de maintien en température du galvannealing.

Le pilotage spécifique au galvannealing des écrans de l'inducteur à flux transverse selon l'invention, permet non seulement d'obtenir un profil de température plat en sortie d'inducteur lorsque le profil d'entré de l'inducteur est plat, mais également d'obtenir un profil de sortie de l'inducteur plat lorsque le profil de température présente des sous-chauffes locales en rive, ce qui est le cas des profils typique en sortie des sections de galvanisation. Le pilotage de la position des écrans permet ainsi de compenser les sous chauffes en rives en sortie de section de galvanisation et d'obtenir un profil de température plat pour différentes largeur de bandes d'acier galvanisé grâce au bon positionnement d'écrans mobiles.

Les caractéristiques et avantages de l'invention apparaîtront à la lecture de la description qui va suivre, laquelle est donnée à titre d'exemple non limitatif et en référence aux figures annexées suivantes :
- Figure 1 : représente schématiquement une section de revêtement d'une ligne de galvanisation pour le traitement d'aciers magnétiques comprenant un galvannealing à chauffage par induction à flux longitudinal selon l'état de la technique,
- Figure 2 : illustre schématiquement le flux magnétique qui résulte d'un inducteur à flux longitudinal,
- Figure 3 : illustre schématiquement le flux magnétique qui résulte d'un inducteur à flux transversal,
- Figure 4 : représente schématiquement un exemple de réalisation d'un appareil de chauffage par induction selon l'invention, et,
- Figure 5 : représente schématiquement, en vue en coupe, un exemple de réalisation d'un appareil de chauffage par induction selon l'invention montrant notamment l'usage d'écrans amovibles.

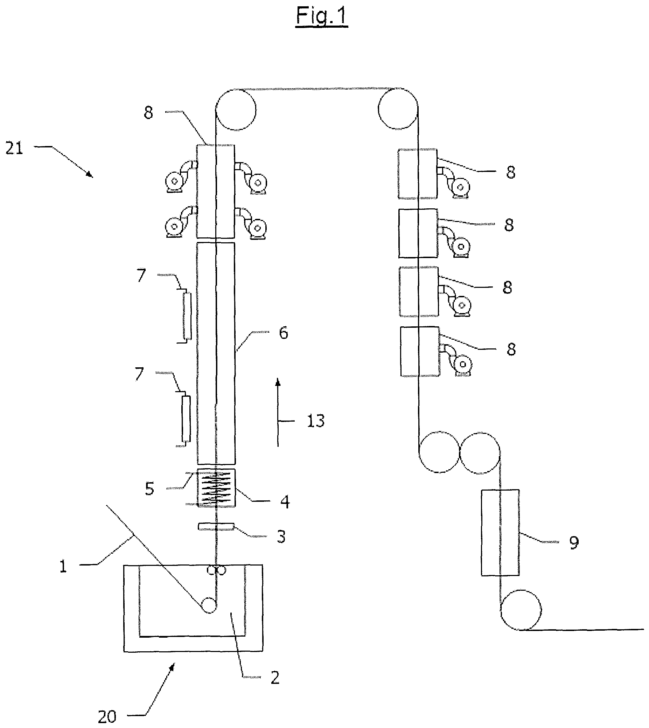

Sur la figure 1 est représentée schématiquement une tour de galvanisation 21 d'une ligne de galvanisation. En aval de la section de revêtement 20 est placée une section de galvannealing. La bande 1 en provenance du four de recuit plonge dans le bain de zinc 2. Le sens de défilement de la bande est indiqué par la flèche 13. En sortie du bain de zinc, la bande remonte verticalement dans la tour de galvanisation. Elle traverse une essoreuse 3 qui va permettre de ne conserver sur la bande que l'épaisseur de revêtement requise avant de rentrée dans la section de galvannealing.

La bande traverse dans un premier temps l'appareil de chauffage 4 équipé d'un inducteur à flux longitudinal 5 qui va permettre de porter la bande à la température requise pour le galvannealing. Elle traverse ensuite l'unité de maintien 6 équipée de résistances électriques 7. La bande est ensuite refroidit à l'air par des gaines de refroidissement 8 successives puis à l'eau dans un bac à eau 9.

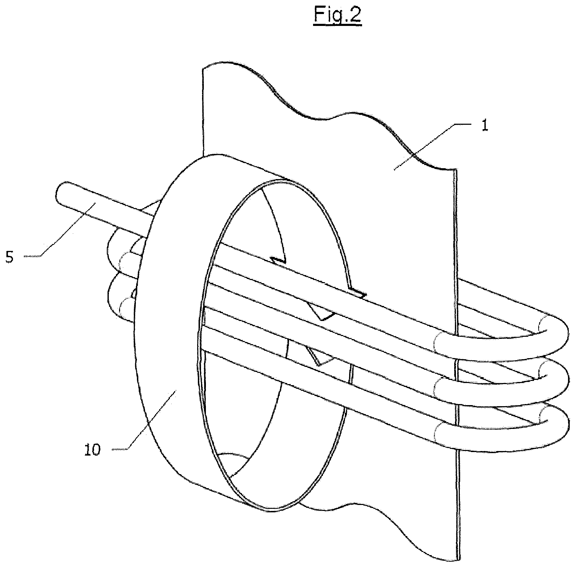

La figure 2 illustre schématiquement le flux magnétique 10 qui résulte d'un inducteur 5 à flux longitudinal. Ce flux est tangent à la surface de bande 1.

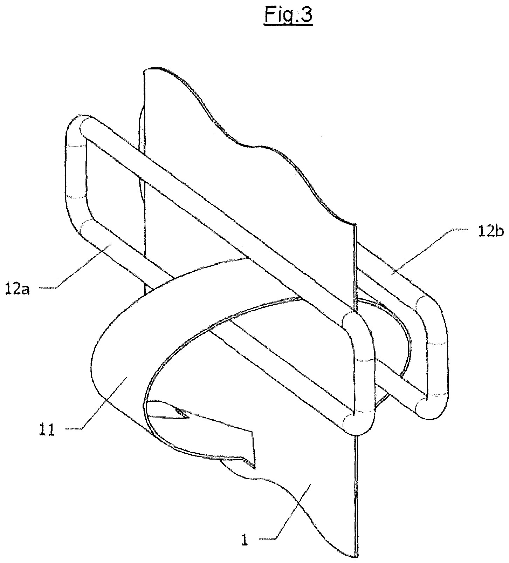

La figure 3 illustre schématiquement le flux magnétique 11 qui résulte d'un inducteur 12 à flux transversal. Cet inducteur est constitué d'une paire de bobine 12a, 12b. Le flux est dirigé perpendiculairement à la surface de la bande 1.

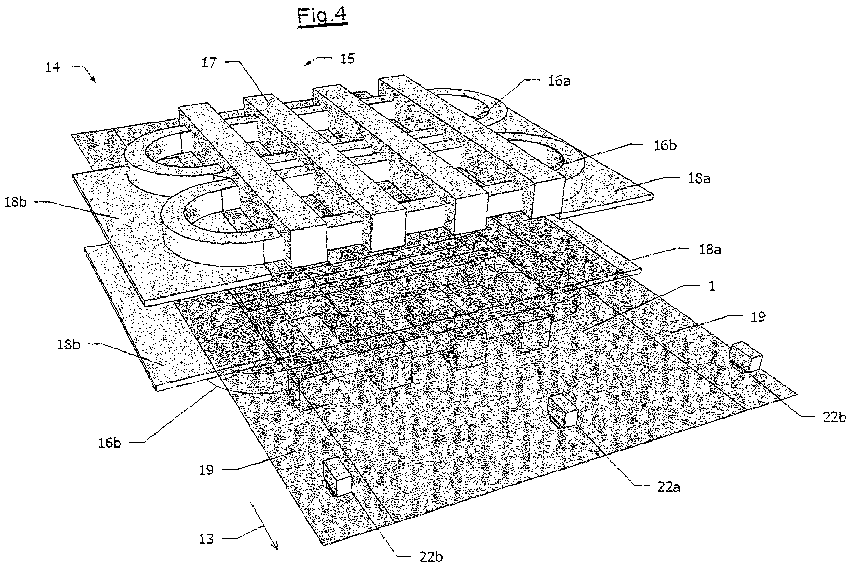

Figure 4 représente schématiquement un exemple de réalisation d'un appareil 14 de chauffage par induction selon l'invention. Cet appareil comprend un inducteur 15 à flux transverse comprenant deux paires de bobines 16a, 16b successives dans le sens de défilement de la bande. Un paire est constituée des bobines placées de chaque côté de la bande 1. Les bobines sont maintenues par des supports 17.

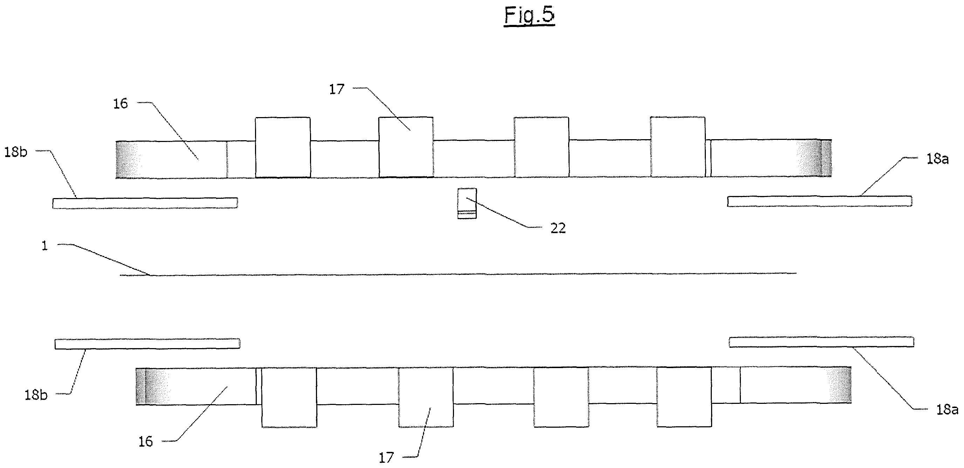

L'appareil comprend également des écrans 18 placés de part et d'autres des rives 19 de la bande. La figure 5 illustre plus explicitement le positionnement de ces écrans amovibles 18a, 18b, par rapport à la bande 1, aux bobines 16 et aux plaques support 17.

Ces écrans sont amovibles latéralement sur la largeur de la bande de sorte d'influer sur le profil transversal de température de la bande. Par ajustement latéral il faut comprendre un rapprochement ou un éloignement de 2 écrans 18a, 18b placés sur les deux rives 19 opposées de la bande. L'ajustement de la position des écrans permet de régler une surchauffe des rives pour compenser les effets de bords qui ont conduit à un refroidissement plus important des rives et obtenir ainsi une température sensiblement homogène de la bande en sortie de l'inducteur.

Selon une variante de réalisation de l'invention, les écrans 18 sont également amovibles transversalement pour ajuster leur écartement par rapport à la bande. Cet ajustement complémentaire permet davantage de possibilité de réglage de l'appareil de chauffage.

Le pilotage des écrans permet ainsi de corriger une température insuffisante des rives préexistantes à la section de galvannealing et ce, pour des tôles de différentes largeur où la position et la largeur des sous-chauffes est variable selon la largeur et l'épaisseur des bandes d'acier à traiter.

Selon un exemple de réalisation de l'invention représenté sur la Fig.4, le pilotage de l'inducteur à flux transverse est effectué à partir d'une mesure de température de la bande par un système 22 de mesure de température sans contact à visée panoramique, couvrant toute la largeur de bande, ou composé de plusieurs systèmes de mesure sans contact sur la largeur de bande, par exemple un système 22a localisé sur le centre de la bande et deux systèmes 22b localisés sur ses rives.

Avantageusement selon l'invention, la position de la bande par rapport à l'axe théorique de la ligne, et sa dérive éventuelle par rapport au centre de la ligne, est contrôlée par le/les systèmes 22 de mesure de température en rives en effectuant une détection réelle de la position des rives obtenue par l'écart entre la température des dites rives et du fond de four. Si nécessaire, la position de l'inducteur est ajustée pour conserver un chauffage optimum de la bande même en cas de dérive de celle-ci par rapport au centre de la ligne.

De plus, le niveau global de température de la bande en sortie de l'inducteur est ajusté avec un minimum d'écart par rapport à la température moyenne imposée par le procédé grâce au système 22 de mesure de température de la bande en ne considérant que la partie centrale de la bande, ou une température moyenne après exclusion de celle des rives.

## Revendications

1. Ligne de traitement en continu d'une bande métallique amagnétique (1), la ligne de traitement comprenant une section de revêtement (20) et une section de galvannealing placée en aval de la section de revêtement (20) et comprenant un appareil (14) de chauffage par induction destiné à chauffer ladite bande métallique amagnétique, **caractérisée en ce que** l'appareil de chauffage comprend au moins un inducteur (15) à flux transverse, des écrans (18) mobiles latéralement sur la largeur de la bande de sorte d'influer sur le profil transversal de température de la bande et **en ce que** l'appareil de chauffage comprend en outre au moins un système (22) de mesure de température de la bande sans contact pilotant la position des écrans (18) pour régler une surchauffe des rives (19) de la bande (1).

2. Ligne de traitement selon la revendication 1, **caractérisée en ce que** les écrans (18) sont mobiles transversalement pour ajuster leur écartement par rapport à la bande.

3. Ligne de traitement selon la revendication 1, **caractérisée en ce que** l'inducteur (15) à flux transverse comprend au moins deux paires de bobines (16).

4. Procédé de chauffage par induction d'une bande métallique amagnétique (1) dans une section de galvannealing d'une ligne de traitement en continu de ladite bande métallique amagnétique, ladite ligne de traitement comprenant une section de revêtement (20), la section de galvannealing étant placée en aval de la section de revêtement, **caractérisé en ce que** le chauffage de la bande est réalisé au moyen d'un inducteur (15) à flux transverse comprenant des écrans (18) mobiles latéralement sur la largeur de la bande de sorte d'influer sur le profil transversal de température de la bande, et **en ce que** la position des écrans (18) mobiles est pilotée par un système (22) de mesure de la température de la bande sans contact pilotant la position des écrans (18) pour régler une surchauffe des rives (19) de la bande (1).

5. Procédé selon la revendication 4, **caractérisé en ce qu'**on ajuste la position des écrans (18) amovibles de manière à régler une surchauffe des rives de la bande métallique amagnétique (1) par l'inducteur (15) à flux transverse et obtenir une température sensiblement homogène de la bande en sortie de l'inducteur.

## Patentansprüche

1. Kontinuierliche Verarbeitungslinie zur Bearbeitung eines nichtmagnetisches Metallbands (1), wobei die Verarbeitungslinie einen Beschichtungs-Abschnitt (20) umfasst und einen Galvannealing-Abschnitt, der sich hinter dem Beschichtungs-Abschnitt (20) befindet, sowie eine Induktionsheizvorrichtung (14) zum Erhitzen des besagten nichtmagnetischen Metallbands, **dadurch gekennzeichnet, dass** die Heizvorrichtung mindestens einen Querstrom-Induktor (15) und seitlich über die Breite des Bandes bewegliche Schirme (18) zur Beeinflussung des Temperatur-Querschnitts des Bandes umfasst, und dadurch, dass die Heizvorrichtung des Weiteren mindestens ein kontaktfreies Messsystem (22) der Bandtemperatur umfasst, welches die Position der Bildschirme (18) zur Regulierung einer Überhitzung der Kanten (19) des Bandes (1) umfasst.

2. Verarbeitungslinie nach Anspruch 1, **dadurch gekennzeichnet, dass** die Schirme (18) in Querrichtung beweglich sind, um ihren Abstand in Bezug auf das Band einzustellen.

3. Verarbeitungslinie nach Anspruch 1, **dadurch gekennzeichnet, dass** der Querstrom-Induktor (15) mindestens zwei Spulenpaare (16) umfasst.

4. Induktionsheizverfahren für ein nichtmagnetisches Metallband (1) in einem Galvannealing-Abschnitt einer kontinuierlichen Verarbeitungslinie zur Bearbeitung des nichtmagnetischen Metallbands, wobei besagte Verarbeitungslinie einen Beschichtungs-Abschnitt (20) umfasst und sich der Galvannealing-Abschnitt hinter dem Beschichtungs-Abschnitt befindet, **dadurch gekennzeichnet, dass** das Erhitzen des Bandes durch einen Querstrom-Induktor (15) erfolgt, welcher seitlich über die Breite des Bandes bewegliche Schirme (18) umfasst, sodass auf den Temperatur-Querschnitt des Bandes eingewirkt werden kann, und dadurch, dass die Position der beweglichen Schirme (18) durch ein kontaktfreies Messsystem (22) der Bandtemperatur gesteuert wird, welches die Position der Bildschirme (18) zwecks Regulierung einer Überhitzung der Kanten (19) des Bands (1) steuert.

5. Verfahren nach Anspruch 4, **dadurch gekennzeichnet, dass** man die Position der abnehmbaren Schirme (18) so angleicht, dass eine Überhitzung der Kanten des nichtmagnetischen Metallbands (1) durch den Querstrom-Induktor (15) reguliert und eine im Wesentlichen einheitliche Temperatur des Bandes am Austritt aus dem Induktor erzielt wird.

## Claims

1. A line for the continuous processing of a non-magnetic metal strip (1), the processing line comprising a coating section (20) and a galvannealing section disposed downstream of the coating section (20) and comprising an induction heating apparatus (14) intended for heating said non-magnetic metal strip, **characterized in that** the heating apparatus comprises at least one cross-flow inductor (15), screens (18) which are adapted to move laterally over the width of the strip so as to affect the temperature transverse profile of the strip and **in that** the heating apparatus further comprises at least one system (22) for measuring, without contact, the temperature of the strip which controls the positions of the screens (18) for adjusting the overheating of the edges (19) of the strip (1).

2. A processing line according to claim 1, **characterized in that** the screens (18) are adapted to move laterally to adjust their spacing relative to the strip.

3. A processing line according to claim 1, **characterized in that** the cross-flow inductor (15) comprises at least two pairs of coils (16).

4. A method for the induction heating of a non-magnetic metal strip (1) in a galvannealing section of a line for the continuous processing of said non-magnetic metal strip, said processing line comprising a coating section (20), with the galvannealing section being disposed downstream of the coating section, **characterized in that** the heating of the strip is performed using a cross-flow inductor (15) comprising screens (18) which are adapted to move laterally over the width of the strip so as to affect the temperature transverse profile of the strip, and **in that** the positions of the mobile screens (18) are controlled by a system (22) for measuring, without contact, the temperature of the strip which controls the positions of the screens (18) for adjusting the overheating of the edges (19) of the strip (1).

5. A method according to claim 4, **characterized in that** the positions of the mobile screens (18) are so adjusted that the cross-flow inductor (15) can control the overheating of the edges of the non-magnetic metal strip (1) and that a substantially homogeneous temperature of the strip can be obtained at the inductor output.
